# EUROPEAN PATENT SPECIFICATION

(11) **EP 1 720 809 B1**
(45) Date of publication and mention of the grant of the patent: **18.05.2016**
(21) Application number: 05704609.6
(22) Date of filing: 04.02.2005
(51) Int. Cl.: C04B 28/02, C04B 28/10, C04B 18/02, C04B 111/00, C04B 18/04

(54) **CONSTRUCTION MATERIAL BASED UPON A SLUDGE OR SLUDGED WASTE MATERIAL**
BAUMATERIAL AUF BASIS EINES SCHLAMMS ODER VERSCHLAMMTEN ABFALLMATERIALS
MATERIAU POUR LA CONSTRUCTION A BASE DE BOUE OU DE DECHETS EN FORME DE BOUE

(30) Priority: 06.02.2004 EP 04075396
(43) Date of publication of application: 15.11.2006
(73) Proprietor: Stichting Deltares, 2629 HD Delft (NL)
(72) Inventor: VAN DER ZON, Wilhelmus, Hendrikus, NL-2521 ZL Den Haag (NL); VAN DER HOEK, Eline, Elisabeth, NL-2611 LC Delft (NL); MOLENDIJK, Waldo, Olaf, NL-3335 El Zwijndrecht (NL); AANTJES, Abraham, Tanno, NL-4661 WP Halsteren (NL)
(74) Representative: V.O.
(86) International application number: PCT/NL2005/000079
(87) International publication number: WO 2005/075373

(56) References cited:
- US-A- 5 049 288
- US-A1- 2003 084 824
- DATABASE CA [Online] CHEMICAL ABSTRACTS SERVICE, COLUMBUS, OHIO, US; SHOWA DENKO K. K., JAPAN: "Concrete" XP002277299 retrieved from STN Database accession no. 99:127512 & JP 58 079859 A (SHOWA DENKO K. K., JAPAN) 13 May 1983 (1983-05-13)
- DATABASE WPI Section Ch, Week 199110 Derwent Publications Ltd., London, GB; Class L02, AN 1991-071626 XP002277300 & SU 1 557 127 A (SIBE AUTO ROAD INST) 15 April 1990 (1990-04-15)
- DATABASE WPI Section Ch, Week 199231 Derwent Publications Ltd., London, GB; Class E34, AN 1992-257367 XP002327402 & SU 1 675 270 A1 (PERM PAPER RES INST) 7 September 1991 (1991-09-07)

## Description

The invention relates to a construction material based upon a sludge or tailing material, such as a dredged material.

Waterways and harbours need to be dredged regularly in order to keep them open. Material that is dredged out of the water are typically considered waste material. Traditionally the material is disposed of, without any further use.

As a result of increased ecological awareness in recent years, there is a growing interest in processing the dredged material such that it can be beneficially used.

WO 02/074391 describes a method for the treatment of dredged material wherein at elevated temperature dredged material and a lime-based binder are mixed. The lime-based binder is added under conditions that result in the reduction of the water content and the volume of the raw dredged material. After cooling, a chelating agent is added, resulting in the decontamination and solidification of the dredged material. The solid material is reported to be suitable as a filler for composite materials.

The abstract of JP-A 58 079 859 describes a concrete mixture comprising amongst other components sludge, cement, foaming agent, citrate, sand and a relatively low amount of water. It is not mentioned that the concrete mixture is fluid. In addition, it is not described to add a fibrous material to the mixture.

The abstract of SU-A 1 557 127 relates to a concrete mixture which has as an advantage a reduced water consumption, The mixture comprises amongst other components cement, bauxite sludge, a binder and lignosulphonates. The water content is relatively low (23.1-26.3 %). It is not The abstract of SU-A 1675 270 describes a mixture for manufacturing light-weight construction products, which mixture contains Portland cement, fibrous wood waste, sludge from sodium hypophosphite production and water. mentioned that the concrete mixture is fluid. In addition, it is not described to add a fibrous material to the mixture.

It is an object of the present invention to provide a method for preparing a construction material from sludge or tailing, without needing a temperature treatment to reduce the water content, material which preferably allows for a flexible use, in particular in civil engineering applications.

It has now surprisingly been found that it is possible to provide a construction mixture, based upon a sludge or tailing material, that remains fluid for a sufficiently long period in order to facilitate its application.

In particular, the present invention provides the possibility to control important parameters such as mechanical strength, bearing strength, stiffness specific weight, permeability, processibility and/or cost of a solid construction material obtainable from a fluid mixture according to the invention.

Accordingly, the present invention relates to a pourable and/or pumpable fluid construction mixture comprising a sludge, which sludge is a dispersion comprising a particulate inorganic mineral material or tailing material (such as a dredged material), a binder selected from the group consisting of fly ashes, cements and lime-based binders (such as calcium oxide, magnesium oxide silica, ferric oxide, aluminium oxide), a binder retarding agent, and an organic fibrous material selected from the group consisting of wood fibres, wool, reed, straw, dried grass (hay) and flax, wherein water is present providing a water to binder weight ratio of more than 1.

The invention further relates to a method of preparing a solid construction material from said fluid mixture, and a solid construction material obtainable by such a method.
Figure 1 shows the shear strength of a mixture according to the invention in the fluid phase, in the plastic phase (after adding binding initiator) and in the hardening phase.
Figure 2 shows permeability of two different construction materials of the invention as a function of the number of flow through volumes.
   It has been found possible to very conveniently control one or more parameters such as mentioned above.
Figure 3 shows an infrastructural element according to the invention.

A construction mixture or a solid construction material according to the invention has been found very suitable for providing an infrastructural element. Preferred examples of such elements are selected from the group consisting of roads, parkings, airplane-landing strips, quays, seawalls, embankments, dikes, road embankments railway embankments, dams, sound barriers and land reclamation projects.

A solid construction material according to the invention has further been found particularly suitable as ballast, in particular as ballast for a ship, counterweights at cranes or ballast material for underwater pipelines or underwater constructions.

A construction mixture according to the invention remains fluid (such that it remains pumpable or pourable) sufficiently, preferably for at least 2 hours more preferably for at least 1 day, under ambient conditions, to allow flexible further processing of the material into a solid material. This allows preparation of the mixture at a different site than the site of preparing the solid material. In principle, it even allows direct use of the fluid mixture to a civil engineering application. It further allows preparing the fluid in a large master batch and providing from that batch different solid materials with different properties.

The fluid mixture may be such that it remains fluid for 4 weeks or more (in the absence of the binding initiator). In practice, it is preferred that it remains fluid for about 1 day to up to about 1 week.

The term fluid is defined herein as being pourable and/or pumpable. In particular a composition is considered fluid if the shear strenght is less than 250 Pa, as measured on a Haake rotoviscosimeter (temperature: 25 °C, spindle: FL10, spindle velocity: 10 rotations per minute)

The term sludge as used herein in the broadest sense is a dispersion comprising a particulate inorganic mineral material (in particular silica based) and water. The term sludge in particular includes dredged materials. The sludge typically contains a mud as major component. Alternatively or in addition it may comprise silt, clay, sand and/or other granular materials.

The term tailing material as used herein is defined as sludged material obtained from mining-, milling-, grinding processing or other sludged industrial waste.

Unless specified otherwise the term sludge is meant to include sludge, tailing material and dredged material.

The term ambient conditions is in particular used herein to describe the temperature of the environment wherein the materials are processed. Preferably such temperature is between about 0 and about 30 °C.

A fluid construction mixture according to the invention may be made by mixing a sludge or tailing material, a binder, a binder retarding agent and one or more optional ingredients together.

A preferred mixing procedure is mixing the sludge and retarding agent prior to mixing the binder.

Another preferred mixing procedure is mixing the sludge with the binder prior to mixing the retarding agent.

In both mixing procedures the other components will usually be added after mixing the sludge, binder and retarding agent.

A method according to the invention may very suitably be carried out under ambient conditions.

It is further an advantage that the sludge or tailing material usually need not be pre-treated before mixing the ingredients. In particular, the sludge or tailing material may be further processed without dewatering.

In case the sludge or tailing material (e.g. a dredged material) contains undesired macroscopic objects (e.g. bricks, bikes and the like, household equipment, packaging materials), these may be removed from the sludge or tailing material, prior to mixing. Such objects are preferably at least partially removed if the have a size of about 5 cm (max. diameter) or more.

Optionally, organic pollutants are removed from the sludge, the tailing material or the mixture, preferably by aerating. It is possible though, to use the sludge without a pre-treatment to remove contaminants such as heavy metals, organic compounds such as mineral oils, PCB's (polychlorobiphenyls), PAC's (polyaromatic hydrocarbons) and the like.

The amount of sludge in the construction mixture is preferably at least about 50 % (by volume), more preferably at least about 65 % (by volume), Preferably the amount does not exceed 98 % (by volume), more preferably the amount is less than about 95 % (by volume).

The amount of binder in the mixture, is preferably about 50-400 kg/m³ of sludge. For a high strength and/or E-modulus, the binder amount is preferably relatively high, in particular about 100 kg/m³ or more, more in particular about 200 kg/m³ or more.

In particular for use as foundation material in infrastructural applications, it is preferred that the amount of binder is at least about 75 kg/m³ sludge.

In particular, for construction purposes it is preferred that the amount binder is less than about 200 kg/m³ sludge, more preferably about 100 kg/m³ or less , especially if a high permeability is desired and/or if it desired that the mixture remains pumpable for a relatively long time.

The binder is selected from the group consisting of fly ashes, cements and lime-based binders (such as calcium oxide, magnesium oxide silica, ferric oxide, aluminium oxide). In a preferred embodiment secondary materials (*i.e.* waste materials) are used as binders. For instance a fly ash - especially fly ash that is rich in calciumoxides - is very suitable.

For maintaining a good initial fluidity, the amount of water in the construction mixture (from the sludge plus optionally extra added water) is usually more than 30 wt. % based upon the total weight of the mixture. For facilitating processability (pumping, pouring) and/or facilitating transportation (providing material with low density), the amount of water is preferably at least about 40 wt. %, more preferably at least about 50 wt. %, in particular at least about 60 wt. %.

For practical reasons, the amount of water is usually less than 90 wt. %, preferably about 85 wt. % or less, more preferably about 80 wt. % or less, in particular about 75 wt. % or less.

The weight ratio water to binder, is above 1. Preferably, the ratio is in the range of 1.5 to 10, more preferably in the range of 2 to 9.

In addition, a binder retarding agent is present in a mixture according to the invention. Such agent slows down or inhibits the solidification of the mixture. Suitable binder retarding agents are known in the art. Cement retarders and concrete retarders are particularly suitable. Suitable retarding agents include compounds which are capable of interfering with the hydration of cement such as citrate and the like. Preferred binder retarding agents include polyphosphates, sulphonated naphthalenes and lignosulphonates.

The skilled person will know how to select a specific binder retarding agent and a suitable concentration in order to control the processibility (the period during which the mixture remains fluid) based upon common general knowledge and the information disclosed herein. Good results have been achieved with a concentration of at least about 0.1 wt. % based on the weight of the sludge. From a technical view point, the upper limit is not particularly critical. Good results have been achieved with a concentration of up to about 1 wt. % or more.

A foaming agent is preferably present, in particular in order to control the specific weight of the mixture (and the solid material that may be made thereof). The presence of a foaming agent is further useful for controlling the permeability (especially for water and/or air) of a solid construction material obtainable by solidifying a fluid mixture according to the invention

The foaming agent is preferably present in an effective amount to cause foaming of the mixture, *e.g.* after mixing, aerating or *in situ* gas generation. The skilled person will know how to select a suitable concentration based upon the nature of the foaming agent, the other ingredients and the desired effect. When present, the concentration of the foaming agent is preferably at least 0.5 kg/m³, more preferably at least 2 kg/m³. Besides contributing to providing a relatively light weight material, the foaming agent may be used to control one or more other properties of the material. In particular a foaming agent may contribute to increased elongation at rupture, an increased permeability and/or for maintaining fluidity for a prolonged time.

Very good results have been achieved with a mixture comprising up to about 5 kg/m³. based on the total weight of the sludge.

The foam content may be chosen in a wide range, depending upon de desired properties. In a preferred embodiment, the foam content in the fluid mixture is up to 50 % (volume/volume), The foam content of a foamed mixture is preferably at least 20 %, although a lower content may be chosen. Foam content is defined herein as the volume percentage of gaseous phase in the mixture.

Suitable foaming agents are known in the art and include surfactants. Particularly suitable are foaming agents commonly used for foaming concrete. The foaming agent may be anionic or cationic.

Preferred foaming agents are sulfonated alkyl compounds. Very good results have been achieved with a compound selected from sulfohydroxypoly(oxy alk-diyl)-(C10 to C16)alkylethers -in particular sulfohydroxypoly(oxy-1,2-ethandiyl)-C10-C16-alkylether - and olefinsulfonates, in particular C14 to C16 olifine sulfonates. Preferably a sodium salt of a sulfonated alkyl compound is employed.

Another group of preferred foaming agents are nitrogen containing surfactants, in particular trialkylaminooxides. Very good results have been achieved with cocosalkyldimethylaminoxide.

An advantage of a mixture comprising a foam is the possibility to form a porous structure from which contaminants - which may be present in the sludge used as a starting material - can be leached out under controlled circumstances.

A weighting material is preferably present to provide a relatively high specific density.

The weighting material typically has a specific weight that is higher than the average specific weight of the total mixture (or solidified construction material). Preferably the specific weight of the weighting agent is more than 2500 kg/m³. The specific weight may be up to 5500 kg/m³ or higher. Preferred examples of weighting materials are sand, baryte, hematite and magnetite, as they have a very high specific weight. Use of such high specific weight materials is especially preferred in case of a solid construction material that is intended for use as ballast material.

In order to increase strength and/or permeability of a solidified construction material obtainable from a fluid construction mixture according to the invention, a fibrous material is present.

For imparting extra strength, fibres selected from the group consisting of metal fibres (in particular iron/steel), polymeric fibres and glass fibres have been found very suitable.

For advantageous permeability and/or increased E-modulus very good results have been achieved with organic fibrous material- for instance wood (in particular wood chips, sawdust), peat dust, wool, reed, straw, flax, hay, other (dried) leave material, and polymeric fibre. are present.

A water permeability of (the solidified material) more than 10⁻⁹ m/s, in particular in the range of about 1 x 10⁻⁸ m/s to about 1 x 10⁻⁴ m/s, more in particular within the range of about 1 x 10⁻⁷ m/s to about 5 x 10⁻⁵ m/s are feasible, by adding fibrous material.

Wood fibres (such as saw dust) and dried grass (hay) have been found particularly suitable for increasing water permeability and/or E-modulus.

Peat dust has been found particularly suitable for increasing E-modulus and/or to maintain a pumpable mixture for a prolonged time. For example, it has been found possible to maintain a pumpable mixture comprising about 100-200 g/l peat dust, for a duration of 5 weeks or more.

The amount of fibres in the construction mixture respectively solid construction material according to the invention is preferably in the range of about 1-100 kg dry material/m³, preferably at least 10 kg dry material/m³.

For realising a highly satisfactory permeability in the solidified material it has been found particularly advantageous to provide the mixture with both a foaming agent and a fibrous material. This combination has been found to enhance the occurrence of open pores in the material, contributing to the permeability of the material.

As indicated above, a fluid construction mixture according to the invention may very suitably be used for preparing a solid construction material.

Such a method typically involves solidifying the fluid construction mixture. Solidification is preferably achieved by adding a binder initiator to the fluid construction mixture. The amount of initiator may be chosen within wide limits. Preferably the binder initiator is added in an effective amount to cause solidifying within 10 seconds to 3 days after adding, under ambient conditions.

Very good results have been achieved with a method, wherein the binder initiator is added in an amount of about 25 to about 250 kg/m³ sludge, in particular within the range of 50-150 kg/m³.
In principle any binder initiator may be used that enhances binding of the binder. Very good results have been achieved with a binder initiator selected from the group consisting of water glass and alkaline hydroxides.

Particularly preferred are sodium hydroxide, potassium hydroxide and sodium aluminates, as these materials generate a high pH, which has been found advantageous to the binding process, in particular when used in combination with a fly ash as binder.

The material may be granulated during or after solidification.

The solidification may be effected in a mould, to make a shaped article (a monolyte) e.g. a plate, a brick or a block.

As indicated above a porous structure may in particular be provided with a foaming agent (providing gas bells that form at least part of the pores), although it is also possible to provide a porous structure in the absence of the foaming agent (due to the presence of water in the liquid mixture , that may be allowed to leak out after solidification).

The porosity may be chosen in a wide range e.g. between 5 and 90 %, preferably up to 75 %. A particular advantage of a porous solid construction material is the relatively low specific weight, independent of the type of the pores (closed or open/interconnected).

The porosity is preferably such that the permeability for water according to Darcy is in the range of 10⁻⁴ m/s to 10⁻¹¹ m/s. As indicated above a desired porosity and permeability may be achieved by providing the mixture from which the solid material is made with foaming agent and/or fibres.

A construction material with a porosity, imparting a permeability of less than 10⁻⁷ m/s, has been found very suitable for use as an insulating material.

An advantage of open pores is that it imparts permeability for water and/or other compounds. This is advantageous because it enables the material to be *cleaned in situ,* after its application *e.g.* in an infrastructural project. If such property is desired, the material is preferably provided with pores imparting a permeability to water of at least 10⁻⁷ m/s, more preferably at least about 10⁻⁶ m/s.

In particular when it is used in a substantially horizontal structure, (*e.g.* road works, landing strip, parking *etc*.), such a permeability may further offer the advantage of allowing rain water to migrate through the structure rather than to form pools of water on the surface.

A preferred infrastructural construction in accordance with the invention is a construction that allows *in situ* removal of undesired (in particular toxic or otherwise harmful) components which may leach from the construction material based upon the sludge. In particular, such construction is a substantially horizontal structure.

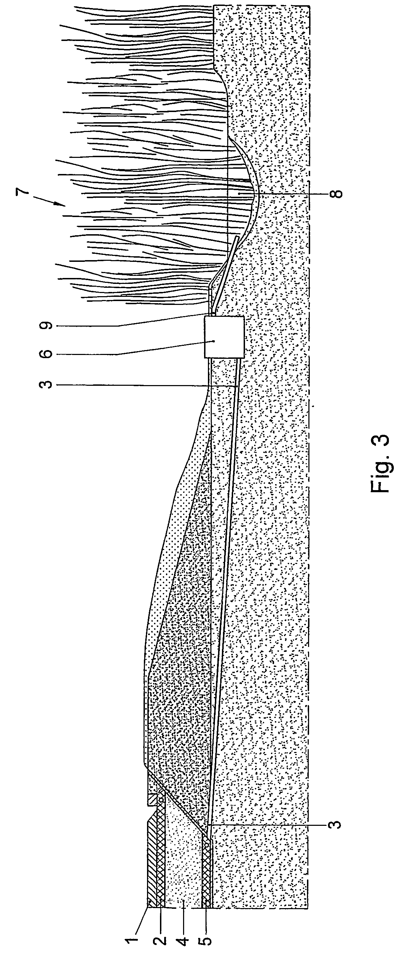

In an embodiment, such as shown in Figure 3, the infrastructural construction comprises a water permeable upper layer 1 on a water permeable support layer 2. said support layer comprising the solid construction material according to the invention, a drain 3 for allowing water permeating from the upper layer through the support layer to be drained from said layers, wherein said drain is in fluid communication with at least one provision (e.g. 6,7,8 in the Figure 3) for removing a component from the water that has permeated through said layers.

The upper layer 1 may be any water permeable layer suitable for use as an upper layer for a specific application. It may for instance be an asphalt layer or a concrete layer for a road, landingstrip or parking surface layer. In principle, the surface layer may comprise a construction material according to the invention.

The infrastructure may further comprise a water-permeable sub-base (4, 5 in Figure 3) below the support layer. Such layers are known in the art. In that case a drain is in fluid communication with the sub base.

The provision for removing a component from the water may be any system for removing a particular component, that may leach from the infrastructural element. Preferably, the provision comprises a system for removing at least one component selecting from the group consisting of heavy metals, PAK's, PCB's and mineral oils. The used system may be based upon a system known in the art.

Very suitably, the infrastructural element comprises a filter 6, comprising an adsorbent for the component(s) to be removed. Suitable absorbents are known in the art and include active coal, iron and peat. Good results have for instance been realised with a peat filter, by which more than 99 % of heavy metals, PAK's, PCB's and/or mineral oils may be removed from the water. Further, a peat filter may be used to neutralise the water percolating from the support layer, which usually is alkaline.

Another suitable type of filter is a helophyte filter (7 in Figure 3), *e.g.* as described in www.duurzaamwater.nl, www.helofytenfilter.nl, Handbook of groundwater remediation using permeable reactive barriers-Applications to radionuclides, trace metals, and nutrients (ISBN 0-12-513563-7) Naftz et al, Acedemic Press, 2002., Afstromend wegwater, Commissie integraal Waterbeheer, april 2002.

Helophyte filters are known in the art. Helophyte filters are filters wherein helophytes (such as reed, reed mace) are used to purify water. The helophytes are usually planted in sand or the like. Preferably, the filter is a so called root-zone filter. Herein the water to be purified flows (between the roots of the plants) through the material in which the helophytes are planted (usually sand). In such a filter, no open water is required.

The functioning of the helophyte filter is mainly based upon the activity of bacteria in the soil upon which the helophytes are planted. Bacteria growth is stimulated by the presence of the helophytes. Bacteria allow aerobic mineralization of organic components in the water. Further, heavy metals and nitrogen containing compounds may be adsorbed in such a filter.

A helophyte filter 7 is preferably positioned down stream of another filter, such as a filter 6 with a adsorbent for the components. The first filter can then be used for removing the bulk of the components.

In addition an anaerobic zone 8 may be present, preferably upstream of the helophyte filter (if present) and/or after a first filter 7 (such as a peat filter). Anaerobic zones are also known in the art, for instance from Technical and Regulatory Guidance Document for Constructed Treatment Wetlands, IRCT Wetland Team, December 2003. The anaerobic zone may be in direct fluid communication with drain 3 (if no filter 7 is used) or with the outlet of filter 7 via drain 9 (as indicated in Figure 3).

The anaerobic zone usually comprise a reservoir for holding the water, such as a ditch. The reservoir comprises an anaerobic layer, usually a layer at or near the bottom of the reservoir, wherein conditions exist for the decomposition of organic materials to CO₂ and/or methane. In addition nitrate may be converted into nitrogen gas. Moreover nutrients like phosphate and/or ammonia may be used by the anaerobic bacteria, to form biomass. Sulphates may be converted into sulfides, for instance in the presence of *Desulfovibrio* and/or *Desulfobacter.* Sulfides may help to immobilise heavy metals.

An advantage of a infrastructural element according to the invention is its suitability for *in situ* cleaning. Thus, a solid construction material can be made in accordance with the invention, said material based upon a polluted sludge, which construction material is cleaned during the life time of the infrastructural element, and at the end of the life time (which may be after 50-60 years or more), the element may be dismantled and the solid material may be deposed of as a class of material with a lower level of polluting components, or may be reused as a relatively clean construction material.

The invention will now be illustrated by the following examples

### Reference Example 1:

A mixture was made with the following ingredients:
- 1 m³ sludge (dredged material)
- 150 kg Binder (CEM III/B 42,5, conform NEN-EN)
- 4 kg binder retarding agent (Addiment HM/VT™ (supplyer Sica/Addiment).
by mixing for 5 minutes gave a base grout that stayed liquid for at least 48 hours

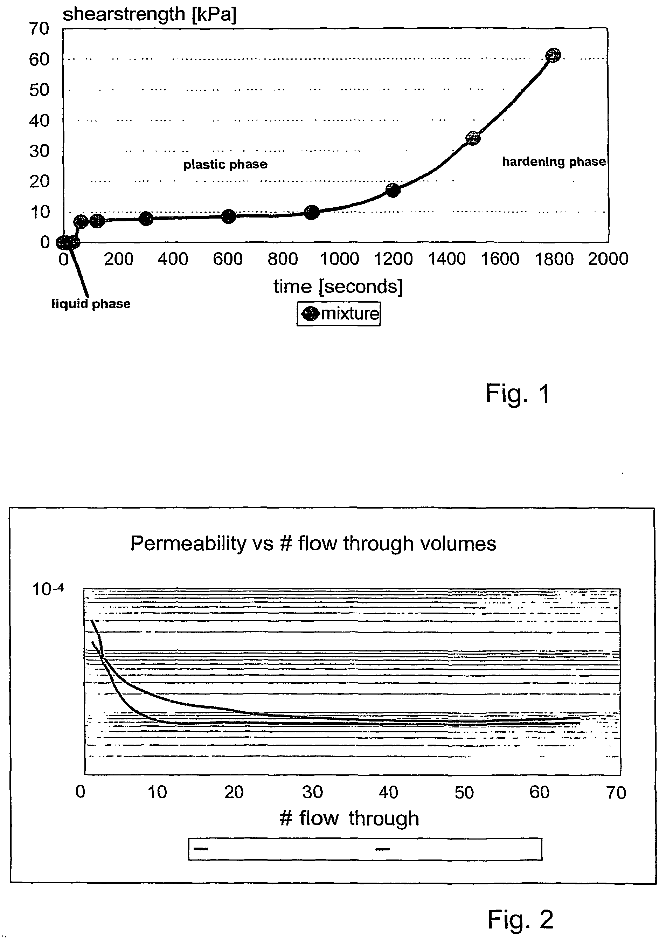

After mixing with 85 kg of Waterglass (32 %) the hardening curve, shown in Figure 1 was obtained:
Figure 1 is a typical hardening curve where the time where the mixture remains liquid for a relatively brief period of time, after adding the initiator and starts to set between10 seconds and 30 minutes after addition thereof.

The plastic phase (where the material has a clay-like behaviour) is preferably set between 15 minutes and 3 days. These setting times depends on the type of binder, the amount of binder, retarding agent and initiator.

### Example 2

The effect of several types of fibrous material was tested. A mixture with the following ingredients:
- 1 m³ sludge (dredged material)
- 200 kg Binder (CEM III/B 42,5, conform NEN-EN)
- 4 kg binder retarding agent (Addiment HM/VT™ (supplier Sica/Addiment).
- 50 kg of fibrous material (hay or saw dust)
were mixed for 5 minutes.
Then 0.5 m³ of foam was added.

Another mixture was made comprising all ingredients except for the fibres.

Mixtures were allowed to set by adding initiator. Setting rate was not or hardly affected by the presence of the fibrous material.

| Fibrous material | Strength [kPa] | E-modulus [Mpa] | elongation at rupture [%] | permeability [m/s] |
|---|---|---|---|---|
| none | 567 | 46 | 6.1 | 1.8x10⁻⁹ |
| Saw dust | 577 | 69 | 5,9 | 3.6 x 10⁻⁵ |
| Hay | 590 | 80 | 6, | 9 x 10⁻⁶ |
| | | | | |

The results show a positive effect of the fibrous material on E-modulus, whilst maintaining good strength. Further, permeability is increased for the material comprising saw dust and the material comprising hay.

The permeability, pH and electric conductivity were monitored as a function of the number of times the material was flown through with water (each time with a volume corresponding to the pore volume of the material).

Permeability was measured using a triaxial cell with a pressure in each direction of 20 kPa, which is comparable to the pressure of a 1 m column of soil. Permeability was maintained at a level as indicated in the above table after more than 60 flow through runs.

pH showed a decrease from 12.3 to 11.2 (saw dust) respectively 11.8-11.0 (hay).

The conductivity curve is shown in Figure 2. The top curve relates to the material comprising hay, the bottom curve to the material comprising saw dust. A considerable decrease in conductivity is shown until equilibrium is reached (for both materials at about 750 µS/cm). From the profile it can be concluded that especially during the first couple of flow through runs a large amount of dissolved components is removed from the material by flow related removal rather than leaching; as the curve flattens and nears equilibrium, the removal by diffusion related leaching becomes the dominant cleaning factor, for cleaning the material.

## Claims

1. Pourable and/or pumpable fluid construction mixture comprising a sludge, which sludge is a dispersion comprising a particulate inorganic mineral material or tailing material (such as a dredged material), a binder selected from the group consisting of fly ashes, cements and lime-based binders (such as calcium oxide, magnesium oxide silica, ferric oxide, aluminium oxide), a binder retarding agent, and an organic fibrous material selected from the group consisting of wood fibres, wool, reed, straw, dried grass (hay) and flax, wherein water is present providing a water to binder weight ratio of more than 1.

2. Construction mixture according to claim 1, comprising a foaming agent.

3. Construction mixture according to any one of the preceding claims , comprising at least one fibrous material selected from the group consisting of metal fibres, polymeric fibres and glass fibres.

4. Construction mixture according to any one of the preceding claims, wherein the amount of water in the construction mixture is more than 30 wt.% based upon the total weight of the mixture.

5. Construction mixture according to any one of the preceding claims , wherein the water to binder weight ratio is in the range of 1.5 to 10, preferably in the range of 2 to 9.

6. Construction mixture according to any one of the preceding claims, wherein the amount of binder in the mixture, is in the range of 50 to 400 kg/m³ sludge, preferably 75 to 200 kg/m³ sludge.

7. Construction mixture according to any one of the preceding claims, wherein the binder is selected from the group consisting of fly ashes.

8. Construction mixture according to any one of the preceding claims, wherein the amount of sludge in the construction mixture is at least 50 % (by volume), preferably 50-98 % (by volume), more preferably 65-95 % (by volume).

9. Construction mixture according to any one of the preceding claims, wherein the binder retarding agent is present in a concentration of at least 0.1 wt. % based on the weight of the sludge.

10. Construction mixture according to any one of the preceding claims, wherein the binder retarding agent is selected from the group consisting of polyphosphates, sulphonated naphthalenes and lignosulphonates.

11. Construction mixture according to any one of the preceding claims, wherein the foaming agent is present in an amount of between 0.5 and 5 kg/m³.sludge.

12. Construction mixture according to any one of the preceding claims, wherein the foaming agent is selected from the group consisting of alkylsulphonates and nitrogen containing sufactants, preferably a foaming agent selected from sulfohydroxypoly(oxy-1,2-ethandiyl)-C10-C16-alkylether (e.g. sodium salt), cocosalkyldimethylaminoxide and sodiumolefin(C14/C16)sulfonate.

13. Construction mixture according to any one of the preceding claims, comprising a weighting material having a specific weight that is higher than the average specific weight of the mixture, preferably selected from the group consisting of minerals with specific weight that is higher that the average specific weight of the mixture, and preferably from the group consisting of baryte, hematite and magnetite.

14. Method for preparing a fluid construction mixture according to any one of the preceding claims comprising mixing the sludge or tailing material, the binder, the binder retarding agent, the fibrous material, optionally a foaming agent and optionally a weighting material.

15. Method according to claim 14, wherein undesired macroscopic objects (e.g. bricks, bikes and the like, household equipment, packaging materials) are removed from the sludge or tailing material, prior to mixing.

16. Method according to claim 14 or 15, wherein organic pollutants - in particular oxidising pollutants - are removed from the sludge, the tailing material or the mixture, preferably by aerating.

17. Method according to any one of the claims 14-16, further comprising solidifying the fluid construction mixture.

18. Method according to claim 17, comprising adding an binder initiator to the fluid construction mixture, thereby causing the solidification of said mixture.

19. Method according to any one of the claims 17 or 18, wherein the binder initiator is added in an amount of 25-250 kg/m³ sludge.

20. Method according to any one of the claims 17-19, wherein the binder initiator is selected from the group consisting of water glass and alkaline hydroxides (such as sodium hydroxide, potassium hydroxide and sodium aluminates).

21. Method according to any one of the claims 17-20, wherein after solidifying, the construction material is granulated.

22. Solid construction material obtainable by a method according any one of the claims 17 to 20.

23. Solid construction material, according to claim 22, having a closed and/or open pores with a porosity up to 75 %.

24. Solid material according to claim 22 or 23 having a water permeability range between 10⁻⁴ m/s and 10⁻¹¹ m/s (according Darcy), preferably between 10⁻⁴ m/s and 10⁻⁷ m/s.

25. Use of a fluid construction mixture as defined in any one of the claims 1-13, or a solid construction material as defined in any one of the claims 22-24 in providing an infrastructural element.

26. Use according to claim 25, wherein the infrastructural element is selected from the group consisting of roads, parkings, airplane-landing strips, quays, seawalls, embankments, dikes, road embankments railway embankments, dams, sound barriers and land reclamation projects.

27. Use of a solid construction material as defined in any one of the claims 22-24 as ballast, in particular as ballast for a ship, counterweights at cranes or ballast material for underwater pipelines or underwater constructions.

## Patentansprüche

1. Gießbares und/ oder pumpbares flüssiges Baugemisch, umfassend einen Schlamm, der eine Dispersion ist, umfassend ein partikelförmiges anorganisches Mineralmaterial oder Abraummaterial (wie beispielsweise ein ausgebaggertes Material), ein Bindemittel, ausgewählt aus der Gruppe bestehend aus Flugaschen, Zementen und Bindemitteln auf Kalkbasis (wie beispielsweise Kalziumoxid, Magnesiumoxidsilica, Eisenoxid, Aluminiumoxid), einen Bindemittel-Abbindeverzögerer und ein organisches Fasermaterial, ausgewählt aus der Gruppe bestehend aus Holzfasern, Wolle, Schilf, Stroh, getrocknetem Gras (Heu) und Flachs, enthält, wobei Wasser vorhanden ist, das ein Wasser-Bindemittel-Gewichtsverhältnis von mehr als 1 liefert.

2. Baugemisch nach Anspruch 1, umfassend einen Schaumbildner.

3. Baugemisch nach einem der vorhergehenden Ansprüche, umfassend mindestens ein Fasermaterial, ausgewählt aus der Gruppe bestehend aus Metallfasern, Polymerfasern und Glasfasern.

4. Baugemisch nach einem der vorhergehenden Ansprüche, wobei die Wassermenge in dem Baugemisch mehr als 30 Gew.-%, basierend auf dem Gesamtgewicht des Gemisches, beträgt.

5. Baugemisch nach einem der vorhergehenden Ansprüche, wobei das Wasser-Bindemittel-Gewichtsverhältnis im Bereich von 1,5 bis 10 liegt, bevorzugt im Bereich von 2 bis 9.

6. Baugemisch nach einem der vorhergehenden Ansprüche, wobei die Menge an Bindemittel in dem Gemisch im Bereich von 50 bis 400 kg/m³ Schlamm liegt, bevorzugt von 75 bis 200 kg/m³ Schlamm.

7. Baugemisch nach einem der vorhergehenden Ansprüche, wobei das Bindemittel aus der Gruppe bestehend aus Flugaschen ausgewählt ist.

8. Baugemisch nach einem der vorhergehenden Ansprüche, wobei die Menge an Schlamm in dem Baugemisch mindestens 50 % (nach Volumen) beträgt, bevorzugt 50-98 % (nach Volumen), bevorzugter 65-95 % (nach Volumen).

9. Baugemisch nach einem der vorhergehenden Ansprüche, wobei der Bindemittel-Abbindeverzögerer in einer Konzentration von mindestens 0,1 Gew.-%, basierend auf dem Gewicht des Schlamms, vorhanden ist.

10. Baugemisch nach einem der vorhergehenden Ansprüche, wobei der Bindemittel-Abbindeverzögerer ausgewählt ist aus der Gruppe bestehend aus Polyphosphaten, sulfonierten Naphthalenen und Lignosulfonaten.

11. Baugemisch nach einem der vorhergehenden Ansprüche, wobei der Schaumbildner in einer Menge zwischen 0,5 und 5 kg/m³ Schlamm vorhanden ist.

12. Baugemisch nach einem der vorhergehenden Ansprüche, wobei der Schaumbildner ausgewählt ist aus der Gruppe bestehend aus Alkylsulfonaten und stickstoffhaltigen Tensiden, bevorzugt ein Schaumbildner, ausgewählt aus Sulfohydroxypoly(oxy-1,2-ethandiyl)-C10-C16-alkylether (z. B. Natriumsalz), Cocosalkyldimethylaminoxid und Natriumolefin(C14/C16)sulfonat.

13. Baugemisch nach einem der vorhergehenden Ansprüche, umfassend ein Beschwerungsmittel mit einem spezifischen Gewicht, das höher als das durchschnittliche spezifische Gewicht des Gemisches ist, bevorzugt ausgewählt aus der Gruppe bestehend aus Mineralien mit einem spezifischen Gewicht, das höher als das durchschnittliche spezifische Gewicht des Gemisches ist, und bevorzugt aus der Gruppe bestehend aus Baryt, Hematit und Magnetit.

14. Verfahren zur Herstellung eines flüssigen Baugemisches nach einem der vorhergehenden Ansprüche, umfassend das Mischen des Schlamms oder des Abraummaterials, des Bindemittels, des Bindemittel-Abbindeverzögerers, des Fasermaterials, optional eines Schaumbildners und optional eines Beschwerungsmaterials.

15. Verfahren nach Anspruch 14, wobei unerwünschte makroskopische Objekte (z. B. Ziegel, Fahrräder und dergleichen, Haushaltsgeräte, Verpackungsmaterialien) vor dem Mischen aus dem Schlamm oder dem Abraummaterial entfernt werden.

16. Verfahren nach Anspruch 14 oder 15, wobei organische Schadstoffe - insbesondere oxidierende Schadstoffe - aus dem Schlamm, dem Abraummaterial oder dem Gemisch entfernt werden, bevorzugt durch Belüften.

17. Verfahren nach einem der Ansprüche 14-16, ferner umfassend das Verfestigen des flüssigen Baugemisches.

18. Verfahren nach Anspruch 17, umfassend das Hinzufügen eines Bindemittelinitiators zu dem flüssigen Baugemisch, wodurch die Verfestigung des Gemisches bewirkt wird.

19. Verfahren nach einem der Ansprüche 17 oder 18, wobei der Bindemittelinitiator in einer Menge von 25-250 kg/m³ Schlamm hinzugefügt wird.

20. Verfahren nach einem der Ansprüche 17-19, wobei der BindemittelInitiator ausgewählt ist aus der Gruppe bestehend aus Wasserglas und Alkalihydroxiden (wie beispielsweise Natriumhydroxid, Kaliumhydroxid und Natriumaluminaten).

21. Verfahren nach einem der Ansprüche 17-20, wobei nach dem Verfestigen das Baumaterial granuliert wird.

22. Feststoffbaumaterial, erhältlich durch ein Verfahren nach einem der Ansprüche 17 bis 20.

23. Feststoffbaumaterial nach Anspruch 22, mit geschlossenen und/oder offenen Poren mit einer Porosität bis 75 %.

24. Feststoffbaumaterial nach Anspruch 22 oder 23, mit einem Wasserdurchlässigkeitsbereich zwischen 10⁻⁴ m/s und 10⁻¹¹ m/s (nach Darcy), bevorzugt zwischen 10⁻⁴ m/s und 10⁻⁷ m/s.

25. Verwendung eines flüssigen Baugemisches, wie in einem der Ansprüche 1-13 definiert, oder eines Feststoffbaumaterials, wie in einem der Ansprüche 22-24 definiert, im Bereitstellen eines infrastrukturellen Elements.

26. Verwendung nach Anspruch 25, wobei das infrastrukturelle Element ausgewählt ist aus der Gruppe bestehend aus Straßen, Parkplätzen, Flugzeuglandebahnen, Kais, Ufermauern, Dämmen, Deichen, Straßendämmen, Eisenbahndämmen, Staudämmen, Lärmschutzmauern und Landgewinnungsproj ekten.

27. Verwendung eines Feststoffbaumaterials, wie in einem der Ansprüche 22-24 definiert, als Ballast, insbesondere als Ballast für ein Schiff, Gegengewichten auf Kränen oder Ballastmaterial für Unterwasser-Pipelines oder Unterwasserkonstruktionen.

## Revendications

1. Mélange fluide, versable et/ou pompable pour la construction comprenant des boues, lesquelles boues consistent en une dispersion comprenant un matériau minéral inorganique particulaire ou des résidus (tel que des résidus de dragage), un liant sélectionné dans le groupe consistant en des cendres volantes, des ciments et des liants calciques (tels que l'oxyde de calcium, la silice-oxyde de magnésium, l'oxyde ferrique, l'oxyde d'aluminium), un agent retardateur de liant, et une matière fibreuse organique sélectionnée dans le groupe consistant en des fibres de bois, laine, roseaux, paille, herbes séchées (foin) et lin, mélange dans lequel est présente de l'eau fournie en un rapport pondéral eau/liant supérieur à 1.

2. Mélange pour la construction selon la revendication 1, comprenant un agent de moussage.

3. Mélange pour la construction selon l'une quelconque des revendications précédentes, comprenant au moins un matériau fibreux sélectionné dans le groupe consistant en des fibres métalliques, des fibres polymériques et des fibres de verre.

4. Mélange pour la construction selon l'une quelconque des revendications précédentes, dans lequel la proportion d'eau dans le mélange pour la construction est supérieure à 30 % en poids exprimé par rapport au poids total du mélange.

5. Mélange pour la construction selon l'une quelconque des revendications précédentes, dans lequel le rapport pondéral eau/liant est compris entre 1,5 et 10, de préférence compris entre 2 et 9.

6. Mélange pour la construction selon l'une quelconque des revendications précédentes, dans lequel la proportion de liant dans le mélange, est comprise entre 50 et 400 kg/m³ de boue, de préférence entre 75 et 200 kg/m³ de boue.

7. Mélange pour la construction selon l'une quelconque des revendications précédentes, dans lequel le liant est sélectionné dans le groupe consistant en des cendres volantes.

8. Mélange pour la construction selon l'une quelconque des revendications précédentes, dans lequel la proportion de boues dans le mélange pour la construction est au moins de 50 % (en volume), de préférence de 50 à 98 % (en volume), plus préférablement de 65 à 95 % (en volume).

9. Mélange pour la construction selon l'une quelconque des revendications précédentes, dans lequel l'agent retardateur du liant est présent en une concentration d'au moins 0,1% en poids exprimé par rapport au poids de boue.

10. Mélange pour la construction selon l'une quelconque des revendications précédentes, dans lequel l'agent retardateur du liant est sélectionné dans le groupe consistant en des polyphosphates, des naphtalènes sulfonés et des lignosulfonates.

11. Mélange pour la construction selon l'une quelconque des revendications précédentes, dans lequel l'agent de moussage est présent en une quantité comprise entre 0,5 et 5 kg/m³ de boues.

12. Mélange pour la construction selon l'une quelconque des revendications précédentes, dans lequel l'agent de moussage est sélectionné dans le groupe consistant en des alkylsulfonates et agents tensioactifs contenant de l'azote, de préférence un agent de moussage sélectionné dans le groupe comprenant sulfohydroxypoly-(oxy-1,2-éthandiyl)-(C₁₀-C₁₆-alkyl)éther (par exemple son sel de sodium), cocoalkyl-diméthylaminoxyde et sodiumoléfine-(C₁₄-C₁₆)sulfonate.

13. Mélange pour la construction selon l'une quelconque des revendications précédentes, comprenant un matériau alourdissant ayant un poids s spécifique qui est supérieur au poids spécifique moyen du mélange, de préférence sélectionné dans le groupe consistant en des produits minéraux dont le poids spécifique est supérieur au poids spécifique moyen du mélange, et de préférence du groupe consistant en baryte, hématite et magnétite.

14. Procédé pour préparer un mélange fluide pour la construction selon l'une quelconque des revendications précédentes, comprenant le mélange des boues ou un résidu, le liant, l'agent retardateur du liant, la matière fibreuse, éventuellement un agent de moussage et éventuellement un matériau alourdissant.

15. Procédé selon la revendication 14, dans lequel des objets macroscopiques non désirés (par exemple briques, vélos et similaires, équipement de ménage, matériaux d'emballage) sont retirés des boues ou du résidu, préalablement au mélange.

16. Procédé selon la revendication 14 ou 15, dans lequel des polluants organiques - en particulier des polluants oxydants - sont retirés des boues, des matériaux inertes ou de leur mélange, de préférence par aération.

17. Procédé selon l'une quelconque des revendications 14 à 16, comprenant en outre la solidification du mélange fluide pour la construction.

18. Procédé selon la revendication 17, comprenant l'ajout d'un initiateur de liant au mélange fluide pour la construction, de façon à provoquer la solidification dudit mélange.

19. Procédé selon l'une quelconque des revendications 17 ou 18, dans lequel l'initiateur de liant est ajouté en une proportion de 25 à 250 kg/m³ d e boues.

20. Procédé selon l'une quelconque des revendications 17 à 19, dans lequel l'initiateur de liant est sélectionné dans le groupe consistant en verre soluble et hydroxydes alcalins (tels que hydroxyde de sodium, hydroxyde de potassium et aluminates de sodium).

21. Procédé selon l'une quelconque des revendications 17 à 20, dans lequel, après solidification, le matériau de construction est granulé.

22. Matériau solide pour la construction susceptible d'être obtenu par un procédé selon l'une quelconque des revendications 17 à 20.

23. Matériau solide pour la construction selon la revendication 22, ayant des pores ouverts et/ou fermés présentant une porosité pouvant atteindre 75%.

24. Matériau solide selon la revendication 22 ou 23 présentant une perméabilité à l'eau comprise entre 10⁻⁹ m/s et 10⁻¹¹ m/s (selon Darcy), de préférence entre 10⁻⁹ m/s et 10⁻⁷ m/s.

25. Utilisation d'un mélange fluide pour la construction tel que défini selon l'une quelconque des revendications 1 à 13, ou un matériau solide de construction tel que défini selon l'une quelconque des revendications 22 à24 pour former un élément d'infrastructure.

26. Utilisation selon la revendication 25, dans laquelle l'élément d'infrastructure est sélectionné dans le groupe consistant en des routes, parkings, zone d'atterrissage d'avions, quais, digues marines, remblais, digues, berges de routes, remblais de chemins de fer, barrages, barrières phoniques et projets de restauration des terres.

27. Utilisation d'un matériau solide de construction tel que défini selon l'une quelconque des revendications 22 à 24 en tant que ballasts, en particulier pour navires, contrepoids pour grues ou matériau de ballast pour pipelines immergés ou constructions immergées
